# EUROPÄISCHE PATENTSCHRIFT

(11) **EP 3 747 613 B1**
(45) Veröffentlichungstag und Bekanntmachung des Hinweises auf die Patenterteilung: **29.03.2023**
(21) Anmeldenummer: 19177924.8
(22) Anmeldetag: 03.06.2019
(51) Int. Cl.: B29B 17/02, B29K 27/06, B29K 105/00, B29B 17/04

(54) **VERFAHREN ZUR AUFBEREITUNG VON ABFALL, WELCHER WEICHMACHERHALTIGES POLYVINYLCHLORID AUFWEIST**
METHOD FOR TREATING WASTE, CONTAINING POLYVINYL CHLORIDE COMPRISING PLASTICIZERS
PROCÉDÉ DE TRAITEMENT DES DÉCHETS COMPORTANT DU POLYCHLORURE DE VINYLE CONTENANT DU PLASTIFIANT

(43) Veröffentlichungstag der Anmeldung: 09.12.2020
(73) Patentinhaber: Pucher, Anton, 8143 Dobl (AT)
(72) Erfinder: PUCHER, Anton, 8143 Dobl (AT); MEIER, Hannes, 4081 Hartkirchen (AT)
(74) Vertreter: Burger, Hannes

(56) Entgegenhaltungen:
- DE-A1- 3 510 266
- DE-C1- 4 302 276
- JP-A- H1 112 386
- JP-A- S5 738 834
- JP-A- S56 111 636
- Thermo Scientific: "Accelerated Solvent Extraction of Plasticizers from Polyvinyl Chloride Polymer Introduction", , 19. Dezember 2013 (2013-12-19), Seiten 1-3, XP055646169, Gefunden im Internet: URL:https://assets.thermofisher.com/TFS-As sets/CMD/Application-Notes/AN336_70640_Fin al.pdf [gefunden am 2019-11-25]
- JING XU ET AL: "Simultaneous recovery of high-purity copper and polyvinyl chloride from thin electric cables by plasticizer extraction and ball milling", RSC ADVANCES, Bd. 8, Nr. 13, 13. Februar 2018 (2018-02-13), Seiten 6893-6903, XP055646198, UK ISSN: 2046-2069, DOI: 10.1039/C8RA00301G

## Beschreibung

Die Erfindung betrifft ein mehrstufiges Verfahren zur Aufbereitung von Abfall, welcher weichmacherhaltiges Polyvinylchlorid aufweist bzw. enthält.

Ganz grundsätzlich ist eine Wiederverwendung bzw. ein Recycling von bereits gebrauchten Materialien im Sinne der Nachhaltigkeit wünschenswert. Im technischen Bereich der Kunststoffmaterialien hat sich zumindest in einigen Ländern bereits eine produktive Recycling-Wirtschaft etabliert, und werden Kunststoffe soweit möglich aus gebrauchten Produkten rückgewonnen und vorzugsweise einer stofflichen Wiederverwendung zugeführt.

In der Vergangenheit wurde eine Vielzahl von Produkten hergestellt, welche weichmacherhaltiges Polyvinylchlorid (PVC) enthalten oder hieraus bestehen. Rein beispielhaft seien Kabelisolierungen, flexible Gegenstände wie etwa Schläuche oder Folien, oder Fußbodenbeläge genannt. Angesichts der großen Menge an Weichmacher-haltigem PVC, welches in der Vergangenheit produziert und zu diversen Produkten weiterverarbeitet wurde, ist natürlich auch in diesem Bereich ein Recycling und im Speziellen eine stoffliche Wiederverwertung dieses Kunststoffes wünschenswert. Eine Rückgewinnung bzw. ein Recycling von PVC wurde in der Vergangenheit auch durchaus bereits durchgeführt.

Die DE 4424143 A1 zum Beispiel offenbart ein Verfahren zum Trennen und Recyceln von in unterschiedlicher Zusammensetzung anfallenden Kunststoffabfällen. Der Kunststoffabfall wird ohne Zerkleinerung in ätherische Öle gegeben, und zuerst Polystyrol-Anteile und hiernach Polyvinylchlorid-Anteile aufgelöst. Die aufgelösten Kunststoff-Anteile werden vom Lösungsmittel wieder getrennt und so wie die nicht gelösten Kunststoff-Anteile einer Weiterverarbeitung zugeführt.

Die DE 10 2014 114 831 A1 beschreibt allgemein Verfahren zur Herstellung von Zielpolymeren aus kunststoffhaltigen Materialien. Getrockneter, das Zielpolymer enthaltender Feststoff wird hierzu mit Lösungsmittel versetzt, und eine Lösung des jeweiligen Zielpolymers, zum Beispiel PVC hergestellt, wobei die unlöslichen Bestandteile abgetrennt werden. Die Zielpolymerlösung wird anschließend durch Austreiben mittels Wasserdampfs aufkonzentriert um das Zielpolymer zu erhalten. Weitere Verfahren, bei welchen PVC in verschiedenen Lösungsmitteln aufgelöst und von unlöslichen Bestandteilen abgetrennt wird, sind zum Beispiel aus der US 3624009 A, US 5674914 A und US 6172125 B1 bekannt. Nachteilig bei diesen bekannten Verfahren ist, dass das PVC aufgelöst und anschließend wieder aus einer Lösung rückgewonnen werden muss.

In jüngerer Vergangenheit sind außerdem zunehmend Bedenken betreffend die in dem PVC enthaltenen Weichmacher, überwiegend Phthalate wie Di-(2-ethylhexyl)-phthalat (DEHP) festzustellen. Es sind bereits auch Chemikalienverordnungen definiert worden, in welchen Ein- bzw. Beschränkungen hinsichtlich der Verwendung von diesen Weichmachern in Produkten bzw. allgemein deren Einsatz formuliert sind. Als bekanntes Beispiel kann beispielhaft die allgemein als REACH-Verordnung bekannte EU-Chemikalienverordnung genannt werden. Auch zukünftig ist mit weiteren diesbezüglichen Ein- bzw. Beschränkungen, auch behördlich vorgegebenen Beschränkungen und allenfalls sogar mit Verboten betreffend diese Weichmacher bzw. weichmacherhaltigen PVC-Produkte zu rechnen.

Dies macht die derzeit gängigen Verfahren zur Rückgewinnung von weichmacherhaltigem PVC unbrauchbar, da hiermit die derzeit bereits etablierten sowie künftig zu erwartenden Verordnungen, Vorgaben bzw. Vorschriften und so weiter nicht erfüllbar sind. Im Ganzen betrachtet ist derzeit kein sowohl in ökologischer als auch wirtschaftlicher Hinsicht sinnvolles Verfahren zur Rückgewinnung von PVC verfügbar, welches auch die oben genannten Bedenken bzw. Einschränkungen betreffend in PVC-Altlasten enthaltene Weichmacher berücksichtigt. JP H11 12386 A, JP S56 111636 A und JP S57 38834 A offenbaren Verfahren zum Recycling von Polyvinylchlorid-Abfall mit Extraktion von Weichmachern aus dem Abfall. Aufgabe der vorliegenden Erfindung war es, diesen Mangel des Standes der Technik zu überwinden und ein Verfahren zur Verfügung zu stellen, mittels welchem trotz der bestehenden und künftig zu erwartenden Beschränkungen betreffend Weichmacher eine stoffliche Wiederverwertung von gebrauchtem Polyvinylchlorid effizient, zugleich nachhaltig und auch wirtschaftlich sinnvoll ermöglicht ist.

Diese Aufgabe wird durch ein Verfahren gemäß den Ansprüchen gelöst.

Das erfindungsgemäße, mehrstufige Verfahren zur Aufbereitung von Abfall, welcher Abfall weichmacherhaltiges Polyvinylchlorid aufweist bzw. enthält, mit Rückgewinnung des Polyvinylchlorids aus dem Abfall, umfasst die Verfahrensschritte
a) Zerkleinern des Abfalls zu Abfallpartikel mit einer Korngröße von höchstens 2 mm und optional Abtrennen von Abfallbestandteilen, welche nicht Polyvinylchlorid sind aus dem Abfall,
b) Extraktion in einem Extraktionsbehältnis mittels eines Extraktionsmittels, wobei als Extraktionsmittel ein originäres oder recyceltes fettes Öl, verestertes Öl, oder eine Mischung aus originären oder recycelten fetten Ölen und/oder veresterten Ölen eingesetzt wird, unter Erhalt eines Extraktionsgemisches mit einer festen, überwiegend aus Polyvinylchlorid bestehenden Phase und einer gelösten bzw. aus dem Polyvinylchlorid extrahierten Weichmacher enthaltenden, flüssigen Phase,
c) Trennen der festen Phase von der flüssigen Phase des Extraktionsgemisches mittels eines Separators, insbesondere eines Dekanters und Sammeln der getrennten festen und flüssigen Phasen.

Betreffend das oder die als Extraktionsmittel verwendete(n) Öl(e) kann der Begriff ungebraucht synonym mit dem Begriff originär verwendet werden. Vorzugsweise kann als Extraktionsmittel ein recyceltes bzw. gebrauchtes Öl, insbesondere Öl-Abfall verwendet werden. Allenfalls kann ein gebrauchtes Öl bzw. Ölester vor dem Einsatz als Extraktionsmittel vorbehandelt werden, beispielsweise können in dem Öl bzw. Ölester schwimmende oder enthaltene bzw. schwebende Feststoffe mittels Filtration herausgefiltert werden.

Allgemein wird unter einem Mineralöl (nicht erfindungsgemäß) eine Ol-Fraktion aus der Erdöldestillation verstanden, wobei auch hier vorzugsweise ein Öl-Abfall und/oder anderweitig nicht oder nur unwirtschaftlich einsetzbare Öl-Fraktion verwendet wird. Der Term Mineralöl umfasst auch Paraffinöle.

Ganz grundsätzlich kann als Extraktionsmittel ein Öl oder mehrere Öle und/oder ein verestertes Öl oder mehrere veresterte Öle mit einer Dichte von 0,8 g/cm bis 0,94 g/cm³ bei 15 °C eingesetzt werden, und haben sich solche Öle als gut geeignete Extraktionsmittel erwiesen. Vorzugsweise kann als Extraktionsmittel ein Öl oder mehrere Öle und/oder ein verestertes Öl oder mehrere veresterte Öle mit einer Dichte von 0,82 g/cm³ bis 0,92 g/cm³ bei 15 °C eingesetzt bzw. verwendet werden. Als Im Besonderen kann als Extraktionsmittel ein Öl oder mehrere Öle und/oder ein verestertes Öl oder mehrere veresterte Öle mit einem Brennwert von mehr als 35 MJ/kg und einer Viskosität von maximal 150 mPa*s eingesetzt werden. Das für das Verfahren eingesetzte bzw. die für das Verfahren eingesetzten Öle und/oder der oder die Öl-Ester sind bei 20 °C flüssig . Insbesondere kann als Extraktionsmittel ein originäres oder recyceltes, nicht flüchtiges fettes Öl, nicht flüchtiges Mineralöl, nicht flüchtiges verestertes Öl, oder einer Mischung aus originären oder recycelten, nicht flüchtigen fetten Ölen, nicht flüchtigen Mineralölen und/oder nicht flüchtigen veresterten Ölen eingesetzt werden.

Nach dem Trennen der nach der Extraktion erhaltenen Phasen besteht die feste Phase überwiegend aus Polyvinylchlorid. Es versteht sich von selbst, dass die feste Phase auch Additive, Füllstoffe bzw. allgemein herstellungsbedingte, übliche Zusätze zum PVC enthalten kann. Des Weiteren kann die feste Phase natürlich auch Verunreinigungen enthalten, sowie geringe, mengenmäßig unbedenkliche Restbestandteile an Weichmacher.

Durch die angegeben Verfahrensschritte bzw. Verfahrensmaßnahmen kann ein Verfahren bereitgestellt werden, mittels welchem eine stoffliche Wiederverwertung von gebrauchtem, weichmacherhaltigem Polyvinylchlorid effizient und auch wirtschaftlich sinnvoll ermöglicht ist. Im Besonderen können Bedenken hinsichtlich des Gehaltes an Weichmachern hintangehalten werden, und kann entsprechend definierten Beschränkungen betreffend diese Weichmacher entsprochen werden.

Das Verfahren hat sich im Besonderen als erstaunlich wirksam hinsichtlich der Entfernung von Weichmachern aus dem Polyvinylchlorid erwiesen, wobei der hohe Zerkleinerungsgrad zu einer Korngröße von höchstens 2 mm sich positiv auf die folgende Extraktion auswirken dürfte. Allenfalls können größere Abfallpartikel in einem Zwischenschritt zwischen dem Zerkleinern des Abfalls und dem Abtrennen des oder der Weichmacher in dem Polyvinylchlorid durch Extraktion durch geeignete Maßnahmen, wie etwa einem Sieben abgetrennt werden, und zum Beispiel neuerlich einem Zerkleinern zugeführt werden. Durch die angegeben Verfahrensmaßnahmen kann Polyvinylchlorid mit zumindest nur mehr sehr geringem und unbedenklichem Gehalt an Weichmachern gewonnen werden, oder kann sogar nahezu weichmacherfreies Polyvinylchlorid erhalten werden.

Vorzugsweise wird das Extraktionsgemisch aus Abfallpartikeln und dem Extraktionsmittel in dem Extraktionsbehältnis bewegt, um eine Durchmischung der Abfallpartikel und dem Extraktionsmittel zu erzwingen. Die Extraktion kann zum Beispiel in einem als Rührbehälter ausgestalteten Extraktionsbehältnis durchgeführt werden, wobei das Extraktionsgemisch mittels einer Rührvorrichtung in dem Extraktionsbehältnis während der Extraktion bewegt wird. Ein Bewegen des Extraktionsgemisches kann hierbei fortwährend über die gesamte Dauer der Extraktion vorgenommen werden.

Nach dem Trennen der festen und der flüssigen Phasen und dem Sammeln der Phasen, kann die feste Phase, welche überwiegend Polyvinylchlorid enthält, ohne Bedenken einer stofflichen Wiederverwertung zugeführt werden. Die flüssige Phase, welche den überwiegenden Anteil an gelöstem Weichmacher enthält, kann isoliert werden, und ebenfalls einer weiteren Verwendung zugeführt werden, gegebenenfalls nach einer entsprechenden Aufarbeitung. Beispielsweise kommt eine Verbrennung der flüssigen Phase zwecks Energiegewinnung in Betracht, oder kann die flüssige Phase als Zusatz für Treibstoff verwertet werden. Alternativ kann die flüssige Phase auch einer Entsorgung zugeführt werden.

Bei einer Weiterbildung des Verfahrens kann vorgesehen sein, dass in Verfahrensschritt a) der Abfall zu Abfallpartikeln mit einer Korngröße von höchstens 0,5 mm zerkleinert wird. Durch diese Maßnahme kann vor allem die nachfolgende Extraktion unterstützt werden bzw. kann mit der Extraktion ein besseres Ergebnis hinsichtlich der Entfernung von Weichmacher aus dem Polyvinylchlorid bzw. PVC erzielt werden.

Des Weiteren kann bevorzugt vorgesehen sein, dass in Verfahrensschritt b) als Extraktionsmittel wenigstens ein fettes Öl, ausgewählt aus einer Gruppe bestehend aus Olivenöl, Kürbiskernöl, Leinöl, Sonnenblumenöl, Distelöl, Palmöl, Palmkernöl, Sojaöl, Rapsöl, Maiskeimöl, Baumwollsamenöl, Erdnussöl und Estern dieser genannten Pflanzenöle, oder eine Mischung aus fetten Ölen und/oder Estern fetter Öle ausgewählt aus dieser genannten Gruppe eingesetzt wird.

Die genannten, fetten Öle und/oder Öl-Ester haben sich als gut geeignet für die Extraktion von Weichmachern aus PVC-Partikeln erwiesen. Darüber hinaus sind diese Öle bzw. Öl-Ester gut verfügbar. Im Speziellen ist auch die Verfügbarkeit von Öl bzw. Öl-Ester-Abfällen der genannten Öle und Öl-Ester gut, welche Öl-Abfälle bzw. Öl-Ester-Abfälle vorzugsweise als Extraktionsmittel eingesetzt werden können. Hierdurch kann ein im Sinne der Ökologie und Nachhaltigkeit, aber auch der Wirtschaftlichkeit besonders vorteilhaftes Verfahren bereitgestellt werden.

In ökologischer aber auch wirtschaftlicher Hinsicht von Vorteil kann weiters auch eine Verfahrensführung sein, bei welcher die in Verfahrensschritt c) gesammelte, flüssige Phase für einen folgenden Verfahrenszyklus wiedereingesetzt wird.

Durch diese Verfahrensmaßnahme kann ein im Verfahren bereits als Extraktionsmittel eingesetztes Öl und/oder Öl-Ester wiederverwendet werden, und kann ein Einsatz von mit Weichmacher unbeladenem Öl und/oder Öl-Ester als frisches Extraktionsmittel hinausgezögert werden. Abhängig von der Qualität bzw. Zusammensetzung des eingesetzten Öles und/oder Öl-Esters kann durchaus auch eine mehrmalige Wiederverwendung als Extraktionsmittel in mehreren der aufeinanderfolgenden Verfahrenszyklen möglich und sinnvoll sein. Im Besonderen kann vorgesehen sein, dass eine gesammelte, flüssige Phase solange für einen folgenden Verfahrenszyklus wiedereingesetzt wird, bis eine Dichte der gesammelten, flüssigen Phase einen Wert von 0,95 g/cm³ übersteigt. Wenn ein bereits als Extraktionsmittel verwendetes Öl bzw. ein bereits als Extraktionsmittel eingesetzter Öl-Ester für einen weiteren Verfahrenszyklus nicht mehr verwendet wird, kann natürlich als Ersatz frisches Öl und/oder frischer Öl-Ester als Extraktionsmittel eingesetzt werden. Hierbei ist es natürlich auch möglich, für einen folgenden Verfahrenszyklus einen Anteil an der in Verfahrensschritt c) in einem vorangegangenen Verfahrenszyklus gesammelten, flüssigen Phase und einen Anteil an frischem Öl und/oder Öl-Ester einzusetzen.

Des Weiteren kann es zweckmäßig sein, wenn in Verfahrensschritt b) die Extraktion ohne externe Zufuhr von Wärmeenergie durchgeführt wird. Hierdurch kann im Speziellen die Wirtschaftlichkeit und die Energiebilanz des Verfahrens verbessert werden. Erstaunlicherweise hat sich erwiesen, dass eine Extraktion auch ohne Zufuhr von externer Wärmeenergie in kurzer Zeit mit hoher Effizienz durchgeführt werden kann, und auch ohne externe Zufuhr von Wärmeenergie zumindest ein überwiegender Anteil an Weichmacher aus dem Polyvinylchlorid extrahiert werden kann.

In manchen Fällen kann aber auch eine Erwärmung des Extraktionsgemische durch Zufuhr von externer Wärmeenergie sinnvoll sein. Im Speziellen kann hierdurch in einer gegebenen Zeitdauer mehr Extraktionsmittel aus dem Polyvinylchlorid entfernt bzw. heraus extrahiert werden, und damit eine größere Menge an Abfall in einem gegebenen Zeitintervall aufbereitet werden. Es kann zum Beispiel zweckmäßig sein, die Extraktion bei einer Temperatur von ca. 30 °C oder ca. 40 °C, insbesondere bei einer Temperatur von ca. 50 °C durchzuführen.

Alternativ oder zusätzlich kann aber auch eine Verfahrensführung von Vorteil sein, bei welcher in Verfahrensschritt b) die Extraktion mittels Ultraschallbehandlung unterstützt wird. Auch durch eine solche Verfahrensmaßnahme kann die Effizienz der Extraktion gesteigert werden.

Als geeignet hat sich überaschenderweise eine Verfahrensführung erwiesen, bei welcher in Verfahrensschritt b) die Extraktion mit einer Extraktionsdauer von bis zu 5 Minuten, beispielsweise ca. 3 Minuten durchgeführt wird. Eine Extraktionsdauer von bis zu 5 Minuten hat sich als ausreichend erwiesen, um in den meisten Fällen eine überwiegende Menge an Weichmacher(n) aus den Polyvinylchlorid-Partikeln zu extrahieren. In manchen Fällen, beispielsweise bei PVC mit sehr hohem Weichmacher-Gehalten kann es aber auch sinnvoll sein eine Zeitdauer von bis zu 1 Stunde für die Extraktion zu wählen.

Grundsätzlich kann die feste Phase, welche überwiegend aus Polyvinylchlorid besteht nach dem Trennen von der flüssigen Phase gesammelt, zum Beispiel agglomeriert bzw. pelletiert, und anschließend stofflich wiederverwendet bzw. in diesem Zustand an einen Verwerter weitergegeben werden.

Es kann aber auch zweckmäßig sein, dass nach Verfahrensschritt c) in einem weiteren Verfahrensschritt d) die feste, überwiegend aus Polyvinylchlorid bestehende Phase durch zumindest eine thermische, das Polyvinylchlorid schmelzende Behandlung aufgearbeitet wird.

Hierdurch kann unter anderem eine Homogenisierung des Polyvinylchlorids erreicht werden. Anschließend kann außerdem eine gezielte Formgebung durchgeführt werden, zum Beispiel kann mittels einer Granuliervorrichtung ein PVC-Granulat mit vorwiegend einheitlicher Partikelgröße hergestellt werden. Diese Maßnahmen sind zum Beispiel zur Erzielung eines höheren Verkaufswertes vorteilhaft. Im Speziellen kann in Verfahrensschritt d) die schmelzende Behandlung durch wenigstens eine erste Extrusion mittels eines Extruders durchgeführt werden.

Es kann in weiterer Folge aber auch vorgesehen sein, dass folgend auf die wenigstens eine erste Extrusion eine weitere, zweite Extrusion mittels eines Extruders durchgeführt wird. Im Zuge einer oder mehrerer Extrusionen kann das gesammelte Polyvinylchlorid gezielt aufgearbeitet werden, wobei durch zwei aufeinanderfolgende Extrusionen mehr Möglichkeiten zur Behandlung bzw. Verarbeitung des Polyvinylchlorids geschaffen sind, beispielsweise um das PVC einerseits gezielt aufarbeiten zu können und andererseits auch die Eigenschaften des PVC gezielt einstellen zu können.

So kann zum Beispiel vorgesehen sein, dass die gesammelte feste, überwiegend aus Polyvinylchlorid bestehende Phase in einem Extruder in geschmolzenen Zustand entgast wird. Hierdurch können insbesondere noch vorhandene niedermolekulare, vorwiegend flüchtige Bestandteile zusätzlich aus dem Polyvinylchlorid entfernt werden, um die Qualität des Polyvinylchlorids weiter zu verbessern. Eine Entgasung kann hierbei gegen Atmosphärendruck erfolgen. Es kann aber auch eine Unterstützung der Entgasung mittels einer Vakuumvorrichtung vorgenommen werden. Eine Entgasung kann vorzugsweise während der ersten Extrusion erfolgen.

Ganz grundsätzlich können im Zuge einer Extrusion der gesammelten festen Phase aus der Extraktion dem geschmolzenen Polyvinylchlorid Zuschlagstoffe beigemengt werden. Eine solche Beimengung kann grundsätzlich im Zuge der ersten Extrusion erfolgen, vorzugsweise erfolgt eine solche Beimengung im Zuge der zweiten Extrusion. Als Zuschlagstoffe kommen alle für PVC geeigneten und gängigen Zuschlagstoffe in Betracht. Als Beispiele seien an dieser Stelle mineralische Füllstoffe wie Calciumcarbonat, Gleitmittel wie etwa Calciumstearate und reaktive Komponenten wie etwa Calciumoxid zur Entfeuchtung genannt. Selbstverständlich können je nach Anforderung an das PVC auch weitere Zuschlagstoffe, wie etwa Farbpigmente und so weiter beigemengt werden, wobei der Fachmann solche an sich bekannten Zuschlagstoffe auf Basis der Anforderungen an die Eigenschaften des PVC auswählen kann.

Im Speziellen kann vorgesehen sein, dass der gesammelten festen, überwiegend aus Polyvinylchlorid bestehende Phase im Zuge einer Extrusion im geschmolzenen Zustand zumindest ein funktionalisiertes, reaktives Polymer, insbesondere ein Propfcopolymer oder Terpolymer zum Binden von niedermolekularen Bestandteilen zugesetzt wird. Hierdurch können insbesondere kurzkettige Abbauprodukte des PVC gebunden werden, welche Abbauprodukte zum Beispiel durch Zersetzungsreaktion, ausgelöst durch Benutzung der entsprechenden Produkte, oder durch UV-Licht hervorgerufen sein können. Insgesamt kann die Qualität des PVC, und damit unter anderem auch der Verkaufswert durch diese Maßnahmen weiter gesteigert werden. Im Speziellen kann zum Binden von niedermolekularen Bestandteilen der festen Phase im Zuge einer Extrusion ein Co-Polymer mit einem Maleinsäureanhydrid-Anteil als reaktives Propf-Co-Polymer zugesetzt werden.

Zum besseren Verständnis der Erfindung wird diese anhand der nachfolgenden Figur näher erläutert.

Es zeigt in stark vereinfachter, schematischer Darstellung:

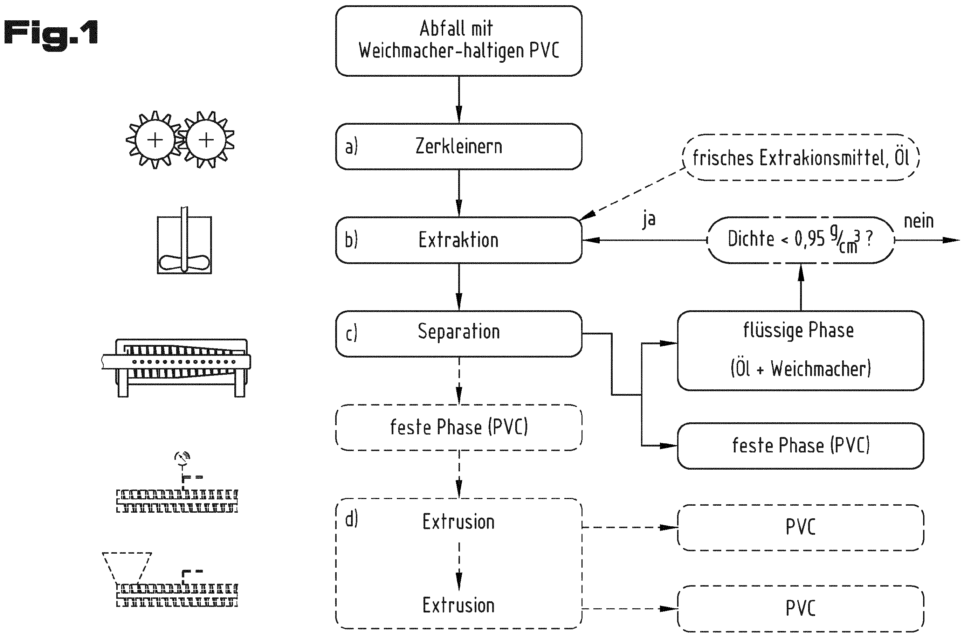

- Fig. 1: Ein Ausführungsbeispiel für einen Verfahrensablauf anhand eines Ablaufschemas für das Verfahren.

In der Fig. 1 ist beispielhaft ein Ablaufschema zur Darstellung eines generellen Ablaufs der Verfahrensschritte des mehrstufigen Verfahrens zur Aufbereitung von weichmacherhaltiges Polyvinylchlorid aufweisenden bzw. enthaltenden Abfall dargestellt. Bei dem Verfahren wird das Polyvinylchlorid (PVC) aus dem Abfall rückgewonnen.

Der mittels des Verfahrens aufgearbeitete Abfall kann ganz grundsätzlich jedweder PVC-haltiger Abfall sein. Der Abfall kann dabei auch weitere Komponenten bzw. Materialien außer PVC umfassen. Ebenso kann der Abfall ganz generell unterschiedlichste Formen aufweisen. Als Beispiele für in hohen Mengen anfallenden, PVC-haltigen Abfall seien Kabelisolierungen, flexible Gegenstände wie etwa Schläuche oder Folien, oder Fußbodenbeläge genannt.

Wie aus der Fig. 1 ersichtlich ist wird der Abfall in einem ersten Verfahrensschritt a) einer Zerkleinerung zugeführt. Zum Zerkleinern des Abfalls können im Prinzip all gängigen Zerkleinerungsmethoden, wie Druck-, Schlag., Reib-, Schneid- oder Prallzerkleinerung angewandt werden, wobei der Fachmann vor allem basierend auf Form, Art und Härte bzw. Spröde und weiteren Eigenschaften und Bestandteilen des Abfalls aus den an sich bekannten Zerkleinerungsmethoden wählen kann. Wesentlich ist hierbei, dass der Abfall zu Abfallpartikel mit einer Korngröße von höchstens 2 mm zerkleinert wird. Vorzugsweise kann auch vorgesehen sein, dass der Abfall zu Abfallpartikeln mit einer Korngröße von höchstens 0,5 mm zerkleinert wird.

Zum Beispiel kann je nach Art und Sprödigkeit des Abfalls durch Schreddern mittels einer Schredder-Vorrichtung bereits eine ausreichende Zerkleinerung erzielbar sein. Für flexiblere Gegenstände kann zum Beispiel der Einsatz von Schneidwerkzeugen für das Zerkleinern erforderlich sein, oder sogar beispielsweise kryogenes Mahlen angezeigt sein. Selbstverständlich ist es auch möglich, ein Zerkleinern mittels mehreren nacheinander ausgeführten Zerkleinerungsschritten durchzuführen, wobei bei einer solchen Zerkleinerungssequenz natürlich auch unterschiedliche Zerkleinerungsmethoden angewandt werden können.

Während oder nach der Zerkleinerung kann wie in der Fig. 1 angedeutet optional auch ein Abtrennen von Abfallbestandteilen, welche nicht Polyvinylchlorid sind aus dem Abfall erfolgen. Auch hierbei kann abhängig von der Zusammensetzung und Form des Abfalls vom Fachmann ein jeweils geeignetes Trenn- bzw. Separationsverfahren ausgewählt werden. Zum Beispiel können mechanische Trennverfahren wie Sedimentation, Abscheidung, Zentrifugation, Rechen, Sieben oder Sichten oder eine Trennung aufgrund der Magnetisierbarkeit von Abfallskomponenten durchgeführt werde, um generell nur einige Beispiele anzuführen. Wie bereits beschrieben ist eine solche Abtrennung von Abfall-Komponenten, welche nicht PVC sind, optional, und muss nicht zwingend durchgeführt werden. Von Vorteil kann vor allem eine Abtrennung von wertvollen Materialien wie etwa Metallen, welche anschließend als Reinsubtanzen einer Wiederverwendung zugeführt werden können, sein.

Anschließend werden, wie in der Fig. 1 dargestellt ist, die zerkleinerten Abfallpartikel in einem Verfahrensschritt b) einer Extraktion in einem Extraktionsbehältnis zugeführt. Als Extraktionsmittel wird ein originäres bzw. ungebrauchtes, oder ein recyceltes fettes Öl, Mineralöl, verestertes Öl, oder eine Mischung aus originären oder recycelten fetten Ölen, Mineralölen und/oder veresterten Ölen eingesetzt. Bevorzugt kann als Extraktionsmittel ein recyceltes bzw. gebrauchtes Öl bzw. verestertes Öl, insbesondere Öl-Ester- bzw. Öl-Abfall verwendet werden, welches Öl bzw. verestertes Öl gegebenenfalls vorbehandelt bzw. aufbereitet werden kann. Insbesondere können in dem Öl bzw. veresterten Öl schwimmende oder enthaltene bzw. schwebende Feststoffe beispielsweise durch Filtrieren vor dem Einsatz des Öls bzw. veresterten Öls als Extraktionsmittel entfernt werden.

Hierbei kann zum Beispiel vorgesehen sein, in Verfahrensschritt b) als Extraktionsmittel wenigstens ein fettes Öl, ausgewählt aus einer Gruppe bestehend aus Olivenöl, Kürbiskernöl, Leinöl, Sonnenblumenöl, Distelöl, Palmöl, Palmkernöl, Sojaöl, Rapsöl, Maiskeimöl, Baumwollsamenöl, Erdnussöl und Estern dieser genannten Pflanzenöle, oder eine Mischung aus fetten Ölen und/oder Estern fetter Öle ausgewählt aus dieser genannten Gruppe einzusetzen. Bei Verwendung dieser fetten Öle, insbesondere fetten Pflanzenöle und/oder veresterten Öle konnten gute Extraktionsergebnisse mit einem hohen Grad bzw. hohen Prozentsatz an aus dem PVC herausgelösten Weichmacher erzielt werden. Neben originären, fetten Ölen bzw. Öl-Estern aus der genannten Gruppe können wiederum auch gebrauchte bzw. recycelte, fette Öle bzw. veresterte Öle aus der genannten Gruppe als Extraktionsmittel in Verfahrensschritt b) eingesetzt werden.

Als Mineralöl kann im Prinzip eine Öl-Fraktion aus der Erdöldestillation verwendet werden, wobei auch hier vorzugsweise ein Öl-Abfall und/oder anderweitig nicht oder nur unwirtschaftlich einsetzbare Öl-Fraktion eingesetzt wird. Es kann auch ein Paraffinöl verwendet werden.

Ganz grundsätzlich kann als Extraktionsmittel ein Öl oder mehrere Öle und/oder ein verestertes Öl oder mehrere veresterte Öle mit einer Dichte von 0,8 g/cm bis 0,94 g/cm³ bei 15 °C eingesetzt werden, und haben sich solche Öle als gut geeignete Extraktionsmittel erwiesen. Vorzugsweise kann als Extraktionsmittel ein Öl oder mehrere Öle und/oder ein verestertes Öl oder mehrere veresterte Öle mit einer Dichte von 0,82 g/cm³ bis 0,92 g/cm³ bei 15 °C eingesetzt bzw. verwendet werden. Im Besonderen kann als Extraktionsmittel ein Öl oder mehrere Öle und/oder ein verestertes Öl oder mehrere veresterte Öle mit einem Brennwert von mehr als 35 MJ/kg und einer Viskosität von maximal 150 mPa*s eingesetzt werden. Das für das Verfahren eingesetzte bzw. die für das Verfahren eingesetzten Öle und/oder der oder die Öl-Ester sind bei 20 °C flüssig .

Vorzugsweise kann die Extraktion, wie auch in dem in der Fig. 1 dargestellten Ablaufschema angedeutet ist, in einem als Rührbehälter ausgestalteten Extraktionsbehältnis durchgeführt werden, wobei das Extraktionsgemisch mittels einer Rührvorrichtung in dem Extraktionsbehältnis während der Extraktion bewegt wird. Dies um das Extraktionsgemisch bestehend aus Abfallpartikeln und dem Extraktionsmittel in dem Extraktionsbehältnis zu durchmischen, bzw. um ein allfälliges Absetzen oder Aufschwimmen der Abfallpartikel hintanzuhalten. Ein Bewegen des Extraktionsgemisches kann hierbei bevorzugt fortwährend über die gesamte Dauer der Extraktion vorgenommen werden.

Grundsätzlich kann die Extraktion in Verfahrensschritt b) bei Umgebungstemperatur, zum Beispiel in einem Temperaturbereich von 15 °C bis 25 °C durchgeführt werden. Anders ausgedrückt kann in Verfahrensschritt b) die Extraktion ohne externe Zufuhr von Wärmeenergie durchgeführt werden. Wie sich erwiesen hat, kann hierdurch bereits ein überwiegender bzw. ausreichender Anteil an Weichmacher aus dem Polyvinylchlorid entfernt werden, wobei das Verfahren in energietechnischer Hinsicht sehr effizient gehalten werden kann.

Es kann aber auch in manchen Fällen von Vorteil sein, das Extraktionsgemisch durch Zufuhr von externer Wärmeenergie zu erwärmen sodass in Verfahrensschritt b) die Extraktion bei einer erhöhten Temperatur von beispielsweise ca. 30 °C durchgeführt wird. In manchen Fällen kann es sogar zweckmäßig sein, die Extraktion bei einer Temperatur von ca. 40 °C, insbesondere bei einer Temperatur von ca. 50 °C durchzuführen. Hinsichtlich einer Unterstützung der Extraktion durch Zuführung thermischer Energie sind ganz grundsätzlich Energieeffizienz und Zeiteffizienz gegeneinander abzuwägen. Alternativ und/oder zusätzlich kann auch vorgesehen sein, dass in Verfahrensschritt b) die Extraktion mittels Ultraschallbehandlung unterstützt wird.

Weiters hat sich eine Extraktionsdauer der Extraktion in Verfahrensschritt b) von bis zu 5 Minuten , zum Beispiel ca. 3 Minuten als gut geeignet erwiesen, um eine ausreichend große bzw. überwiegende Menge an Weichmacher aus dem Polyvinylchlorid zu entfernen. In manchen Fällen, beispielsweise bei PVC mit sehr hohem Weichmacher-Gehalten kann es aber auch zweckmäßig sein, eine Zeitdauer von bis zu 1 Stunde für die Extraktion zu wählen.

Durch die Extraktion wird ein Extraktionsgemisch mit einer festen, überwiegend aus Polyvinylchlorid bestehenden Phase und einer gelösten Weichmacher enthaltenden, flüssigen Phase erhalten. Hierbei kann die feste Phase auch Additive, Füllstoffe bzw. allgemein herstellungsbedingte, übliche Zusätze zum PVC enthalten kann. Des Weiteren kann die feste Phase natürlich auch Verunreinigungen enthalten, sowie geringe, mengenmäßig unbedenkliche Restbestandteile an Weichmacher.

Wie in der Fig. 1 dargestellt ist, erfolgt nach der Extraktion ein Trennen bzw. Separieren der festen Phase von der flüssigen Phase des Extraktionsgemisches. Eine solche Trennung wird mittels eines Separators, insbesondere eines Dekanters bzw. einer Dekantierzentrifuge durchgeführt, wie auch in der Fig. 1 angedeutet ist. Ganz grundsätzlich können natürlich auch andere Trennvorrichtungen bzw. andere Trennmethoden, wie etwa Filtration, Sedimentation, Sieben angewandt werden, wobei sich ein Separator, mittels welchem ein Trennen mittels Zentrifugalkräfte bewerkstelligt wird, als am besten geeignet erwiesen hat. Bevorzugt wird ein 2-Phasen-Dekanter zum Trennen der flüssigen und festen Phase nach der Extraktion eingesetzt.

Die feste, überwiegend aus Polyvinylchlorid bestehende Phase und die gelösten Weichmacher enthaltende, flüssige Phase werden nach deren Trennung gesammelt. Hiernach können die beiden gesammelten Phasen grundsätzlich unverändert jeweils einer Weiterverwertung zugeführt werden.

Die flüssige Phase, welche (veresterte(s)) Öl(e) mit darin gelöstem bzw. gelösten Weichmacher umfasst, kann zum Beispiel einer Verbrennung zwecks Energiegewinnung zugeführt werden. Allenfalls kann vor einer Verwertung der flüssigen Phase eine Aufarbeitung selbiger erfolgen, zum Beispiel eine Filtration. Die flüssige Phase kann, gegebenenfalls nach einer solchen Aufarbeitung beispielsweise auch als Treibstoffzusatz in Motoren und/oder Generatoren dienen. Alternativ kann die flüssige Phase auch einer Entsorgung zugeführt werden.

Bei einer bevorzugten Verfahrensführung kann die in Verfahrensschritt c) gesammelte, flüssige Phase für einen folgenden Verfahrenszyklus wiedereingesetzt werden, wie dies auch in der Fig. 1 veranschaulicht ist.

Abhängig von der Qualität bzw. Zusammensetzung des eingesetzten Öles und/oder Öl-Esters kann durchaus auch eine mehrmalige Wiederverwendung als Extraktionsmittel in mehreren der aufeinanderfolgenden Verfahrenszyklen möglich und sinnvoll sein. Im Besonderen kann vorgesehen sein, dass eine gesammelte, flüssige Phase solange für einen folgenden Verfahrenszyklus wiedereingesetzt wird, bis eine Dichte der gesammelten, flüssigen Phase einen Wert von 0,95 g/cm³ übersteigt.

Wenn ein bereits als Extraktionsmittel verwendetes Öl bzw. ein bereits als Extraktionsmittel eingesetzter Öl-Ester für einen weiteren Verfahrenszyklus nicht mehr verwendet wird, kann natürlich als Ersatz frisches Öl und/oder frischer Öl-Ester als Extraktionsmittel eingesetzt werden, wie dies anhand der strichlierten Linien in Fig. 1 veranschaulicht ist. Hierbei ist es natürlich auch möglich, für einen folgenden Verfahrenszyklus einen Anteil an der in Verfahrensschritt c) in einem vorangegangenen Verfahrenszyklus gesammelten, flüssigen Phase und einen Anteil an frischem Öl und/oder Öl-Ester einzusetzen.

Grundsätzlich kann die feste Phase, welche überwiegend aus Polyvinylchlorid besteht nach dem Trennen von der flüssigen Phase gesammelt und anschließend stofflich wiederverwendet bzw. in diesem Zustand an einen Verwerter weitergegeben werden. Allenfalls kann vor der Wiederverwertung eine Korngröße des PVC durch Agglomerieren, insbesondere Pelletieren oder Aufbaugranulieren vergrößert werden.

Im Besonderen zur Wertsteigerung der gesammelten, vorwiegend aus Polyvinylchlorid bestehenden Phase, kann aber auch nach Verfahrensschritt c) die gesammelte feste, überwiegend aus Polyvinylchlorid bestehende Phase in einem weiteren Verfahrensschritt d) durch zumindest eine thermische, das Polyvinylchlorid schmelzende Behandlung aufgearbeitet werden. Dieser weitere Verfahrensschritt d) ist in der Fig. 1 anhand der strichlierten Linien veranschaulicht. Durch einen solchen, zusätzlichen Verfahrensschritt kann unter anderem eine Homogenisierung des Polyvinylchlorids erreicht werden. Anschließend kann des Weiteren eine gezielte Formgebung durchgeführt werden, zum Beispiel kann mittels einer Granuliervorrichtung ein PVC-Granulat mit vorwiegend einheitlicher Partikelgröße hergestellt werden. Alternativ wäre auch eine Formgebung mittels Spritzgießen, Tiefziehen oder einer anderen, plastischen Methode zur Formgebung grundsätzlich denkbar.

Vorzugsweise kann die schmelzende Behandlung in Verfahrensschritt d) durch wenigstens eine erste Extrusion mittels eines Extruders durchgeführt werden, wie dies schematisch auch in der Fig. 1 veranschaulicht ist. Wie weiters in der Fig. 1 dargestellt ist, kann folgend auf die wenigstens eine erste Extrusion auch eine weitere, zweite Extrusion mittels eines Extruders durchgeführt werden. Durch zwei aufeinanderfolgende Extrusionen sind mehr Möglichkeiten zur Behandlung bzw. Verarbeitung des Polyvinylchlorids geschaffen, beispielsweise um das PVC einerseits gezielt aufarbeiten zu können und andererseits auch die Eigenschaften des PVC gezielt einstellen zu können.

Bei dem in der Fig. 1 schematisch veranschaulichten Ablaufschema des Verfahrens kann zum Beispiel vorgesehen sein, dass die gesammelte feste, überwiegend aus Polyvinylchlorid bestehende Phase in einem Extruder in geschmolzenen Zustand entgast wird. Eine solche Entgasung kann zum Beispiel während der ersten Extrusion durchgeführt werden, und kann eine Entgasung gegen Atmosphärendruck erfolgen oder durch Anlegen eines Vakuums mittels einer Vakuumvorrichtung bzw. Vakuumpumpe als Vakuumentgasung durchgeführt werden.

Des Weiteren können im Zuge einer Extrusion dem geschmolzenen Polyvinylchlorid Zuschlagstoffe beigemengt werden, beispielsweise im Zuge der in der Fig. 1 dargestellten, zweiten Extrusion. Hierbei können dem PVC grundsätzlich alle zur Beimengung zu Polyvinylchlorid geeigneten und grundsätzlich bekannten Zuschlagstoffe, beispielsweise mineralische Füllstoffe wie Calciumcarbonat, Gleitmittel wie Calciumstearate, reaktive Komponenten wie etwa Calciumoxid zur Entfeuchtung und/oder Farbpigmente und so weiter beigemengt werden. Eine Auswahl des Typs und der Menge an zugefügten Zuschlagstoff richtet sich dabei vorrangig nach den jeweils gewünschten Eigenschaften des extrudierten, recycelten Polyvinylchlorids.

Im Speziellen kann der festen, überwiegend aus Polyvinylchlorid bestehende Phase im Zuge einer Extrusion im geschmolzenen Zustand zumindest ein reaktives, funktionalisiertes Polymer, insbesondere ein Propfcopolymer oder Terpolymer zum Binden von niedermolekularen Bestandteilen zugesetzt werden. Im Speziellen kann zum Binden von niedermolekularen Bestandteilen der festen Phase im Zuge einer Extrusion ein Co-Polymer mit einem Maleinsäureanhydrid-Anteil zugesetzt werden.

Mittels des beschriebenen Verfahrens kann Polyvinylchlorid mit zumindest nur mehr sehr geringem, unbedenklichem Gehalt an Weichmachern gewonnen werden, oder kann sogar nahezu weichmacherfreies Polyvinylchlorid erhalten werden. Hierdurch können auch weichmacherhaltige PVC-Altlasten einer wirtschaftlich und ökologisch sinnvollen Wiederverwertung, insbesondere einer stofflichen Wiederverwertung zugeführt werden.

Der Schutzbereich ist durch die Ansprüche bestimmt. Die Beschreibung und die Zeichnungen sind jedoch zur Auslegung der Ansprüche heranzuziehen.

## Patentansprüche

1. Mehrstufiges Verfahren zur Aufbereitung von Abfall, welcher weichmacherhaltiges Polyvinylchlorid aufweist, mit Rückgewinnung des Polyvinylchlorids aus dem Abfall, umfassend die Verfahrensschritte,
a) Zerkleinern des Abfalls zu Abfallpartikel mit einer Korngröße von höchstens 2 mm und optional Abtrennen von Abfallbestandteilen, welche nicht Polyvinylchlorid sind aus dem Abfall,
b) Extraktion in einem Extraktionsbehältnis mittels eines Extraktionsmittels unter Erhalt eines Extraktionsgemisches mit einer festen, überwiegend aus Polyvinylchlorid bestehenden Phase und einer gelösten Weichmacher enthaltenden, flüssigen Phase,
c) Trennen der festen Phase von der flüssigen Phase des Extraktionsgemisches mittels eines Separators, insbesondere eines Dekanters und Sammeln der getrennten festen und flüssigen Phasen,
**dadurch gekennzeichnet, dass**
als Extraktionsmittel ein originäres oder recyceltes fettes Öl, verestertes Öl, oder eine Mischung aus originären oder recycelten fetten Ölen und/oder veresterten Ölen eingesetzt wird.

2. Verfahren nach Anspruch 1, **dadurch gekennzeichnet, dass** in Verfahrensschritt a) der Abfall zu Abfallpartikeln mit einer Korngröße von höchstens 0,5 mm zerkleinert wird.

3. Verfahren nach einem der vorhergehenden Ansprüche, **dadurch gekennzeichnet, dass** in Verfahrensschritt b) als Extraktionsmittel wenigstens ein fettes Öl, ausgewählt aus einer Gruppe bestehend aus Olivenöl, Kürbiskernöl, Leinöl, Sonnenblumenöl, Distelöl, Palmöl, Palmkernöl, Sojaöl, Rapsöl, Maiskeimöl, Baumwollsamenöl, Erdnussöl und Estern dieser genannten Pflanzenöle, oder eine Mischung aus fetten Ölen und/oder Estern fetter Öle ausgewählt aus dieser genannten Gruppe eingesetzt wird.

4. Verfahren nach einem der vorhergehenden Ansprüche, **dadurch gekennzeichnet, dass** als Extraktionsmittel ein Öl oder mehrere Öle und/oder ein verestertes Öl oder mehrere veresterte Öle mit einer Dichte von 0,8 g/cm³ bis 0,94 g/cm³ bei 15 °C eingesetzt wird.

5. Verfahren nach einem der vorhergehenden Ansprüche, **dadurch gekennzeichnet, dass** als Extraktionsmittel ein Öl oder mehrere Öle und/oder ein verestertes Öl oder mehrere veresterte Öle mit einem Brennwert von mehr als 35 MJ/kg und einer Viskosität von maximal 150 mPa*s eingesetzt wird.

6. Verfahren nach einem der vorhergehenden Ansprüche, **dadurch gekennzeichnet, dass** die in Verfahrensschritt c) gesammelte, flüssige Phase für einen folgenden Verfahrenszyklus wiedereingesetzt wird.

7. Verfahren nach Anspruch 6, **dadurch gekennzeichnet, dass** eine gesammelte, flüssige Phase solange für einen folgenden Verfahrenszyklus wiedereingesetzt wird, bis eine Dichte der gesammelten, flüssigen Phase einen Wert von 0,95 g/cm³ übersteigt.

8. Verfahren nach einem der vorhergehenden Ansprüche, **dadurch gekennzeichnet, dass** in Verfahrensschritt b) die Extraktion ohne externe Zufuhr von Wärmeenergie durchgeführt wird.

9. Verfahren nach einem der vorhergehenden Ansprüche, **dadurch gekennzeichnet, dass** in Verfahrensschritt b) die Extraktion mittels Ultraschallbehandlung unterstützt wird.

10. Verfahren nach einem der vorhergesehenen Ansprüche, **dadurch gekennzeichnet, dass** nach Verfahrensschritt c) in einem weiteren Verfahrensschritt d) die gesammelte feste, überwiegend aus Polyvinylchlorid bestehende Phase durch zumindest eine thermische, das Polyvinylchlorid schmelzende Behandlung aufgearbeitet wird.

11. Verfahren nach Anspruch 10, **dadurch gekennzeichnet, dass** in Verfahrensschritt d) die schmelzende Behandlung durch wenigstens eine erste Extrusion mittels eines Extruders durchgeführt wird.

12. Verfahren nach Anspruch 11, **dadurch gekennzeichnet, dass** folgend auf die wenigstens eine erste Extrusion eine weitere, zweite Extrusion mittels eines Extruders durchgeführt wird.

13. Verfahren nach Anspruch 11 oder 12, **dadurch gekennzeichnet, dass** die gesammelte feste, überwiegend aus Polyvinylchlorid bestehende Phase in einem Extruder in geschmolzenen Zustand entgast wird.

14. Verfahren nach einem der Ansprüche 11 bis 13, **dadurch gekennzeichnet, dass** der festen, überwiegend aus Polyvinylchlorid bestehende Phase im Zuge einer Extrusion zumindest ein funktionalisiertes, reaktives Polymer, insbesondere ein Propfcopolymer oder Terpolymer zum Binden von niedermolekularen Bestandteilen zugesetzt wird.

## Claims

1. A multi-stage method for processing waste, which contains polyvinyl chloride comprising plasticizers, with recovery of the polyvinyl chloride from the waste, comprising the method steps
a) comminuting the waste to waste particles having a grain size of 2 mm at maximum and optionally separating waste components other than polyvinyl chloride from the waste,
b) extraction in an extraction vessel by means of an extraction agent thus obtaining an extraction mixture comprising a solid phase consisting predominantly of polyvinyl chloride and a liquid phase containing dissolved plasticizer,
c) separating the solid phase from the liquid phase of the extraction mixture by means of a separator, in particular a decanter, and collecting the separated solid and liquid phases,
**characterized in that**
an original or recycled fatty oil, esterified oil, or a mixture of original or recycled fatty oils and/or esterified oils is used as the extraction agent.

2. The method according to claim 1, **characterized in that**, in method step a), the waste is comminuted to waste particles with a grain size of 0.5 mm at maximum.

3. The method according to one of the preceding claims, **characterized in that**, in step b), at least one fatty oil, selected from a group consisting of olive oil, pumpkin seed oil, linseed oil, sunflower oil, thistle oil, palm oil, palm kernel oil, soya oil, rapeseed oil, corn germ oil, cottonseed oil, peanut oil and esters of these mentioned vegetable oils, or a mixture of fatty oils and/or esters of fatty oils selected from this mentioned group is used as the extraction agent.

4. The method according to one of the preceding claims, **characterized in that** an oil or multiple oils and/or an esterified oil or multiple esterified oils with a density of 0.8 g/cm³ to 0.94 g/cm³ at 15 °C is used as the extraction agent.

5. The method according to any one of the preceding claims, **characterized in that** an oil or multiple oils and/or an esterified oil or multiple esterified oils having a heating value of more than 35 MJ/kg and a viscosity of 150 mPa*s at maximum is used as the extraction agent.

6. The method according to one of the preceding claims, **characterized in that** the liquid phase collected in method step c) is reused for a subsequent method cycle.

7. The method according to claim 6, **characterized in that** a collected liquid phase is reused for a subsequent method cycle until a density of the collected liquid phase exceeds a value of 0.95 g/cm³.

8. The method according to one of the preceding claims, **characterized in that**, in process step b), the extraction is carried out without an external supply of thermal energy.

9. The method according to one of the preceding claims, **characterized in that**, in process step b), the extraction is supported by means of an ultrasonic treatment.

10. The method according to one of the preceding claims, **characterized in that**, after process step c), in a further process step d), the collected solid phase consisting predominantly of polyvinyl chloride is reconditioned by at least one thermal treatment melting the polyvinyl chloride.

11. The method according to claim 10, **characterized in that**, in method step d), the melting treatment is carried out by at least one first extrusion by means of an extruder.

12. The method according to claim 11, **characterized in that** subsequently to the at least one first extrusion, a further, second extrusion is carried out by means of an extruder.

13. The method according to claim 11 or 12, **characterized in that** the collected solid phase predominantly consisting of polyvinyl chloride is degassed in its molten state in an extruder.

14. The method according to one of claims 11 to 13, **characterized in that** at least one functionalized, reactive polymer, in particular a graft copolymer or terpolymer for binding low molecular weight constituents, is added to the solid phase consisting predominantly of polyvinyl chloride in the course of an extrusion.

## Revendications

1. Procédé en plusieurs étapes pour le traitement de déchets comprenant du polychlorure de vinyle contenant du plastifiant, avec récupération du polychlorure de vinyle à partir des déchets, comprenant les étapes suivantes :
a) broyage des déchets en particules de déchets avec une taille de grains de 2 mm maximum et, en option, élimination des composants des déchets qui ne sont pas du polychlorure de vinyle,
b) extraction dans un récipient d'extraction au moyen d'un produit d'extraction, afin d'obtenir un mélange d'extraction avec une phase solide constituée majoritairement de polychlorure de vinyle et une phase liquide dissoute contenant du plastifiant,
c) séparation de la phase solide de la phase liquide du mélange d'extraction au moyen d'un séparateur, plus particulièrement d'un décanteur, et collecte des phases solide et liquide séparées,
**caractérisé en ce que**
le produit d'extraction utilisé peut être une huile grasse primaire ou recyclée, une huile estérifiée ou un mélange d'huiles grasses primaires ou recyclées et/ou d'huiles estérifiées.

2. Procédé selon la revendication 1, **caractérisé en ce que**, à l'étape a), les déchets sont broyés en particules de déchets avec une taille de grain de 0,5 mm maximum.

3. Procédé selon l'une des revendications précédentes, **caractérisé en ce que**, à l'étape b), le produit d'extraction est au moins une huile grasse sélectionné dans un groupe constitué de : huile d'olive, huile de pépins de courge, huile lin, huile de tournesol, huile de carthame, huile de palme, huile de palmiste, huile de soja, huile de colza, huile de germe de maïs, huile de coton, huile de noix et des esters de ces huiles végétales mentionnées ou un mélange d'huiles grasses et/ou d'esters d'huiles grasses, sélectionnées dans ce groupe mentionné.

4. Procédé selon l'une des revendications précédentes, **caractérisé en ce que** le produit d'extraction utilisé est une huile ou plusieurs huiles et/ou une huile estérifiée ou plusieurs huiles estérifiées avec une densité de 0,8 g/cm³ à 0,94 g/cm³ à 15 °C.

5. Procédé selon l'une des revendications précédentes, **caractérisé en ce que** le produit d'extraction utilisé est une huile ou plusieurs huiles et/ou une huile estérifiée ou plusieurs huiles estérifiées avec un pouvoir calorifique supérieur à 35 MJ/kg et une viscosité de 150 mPa*s.

6. Procédé selon l'une des revendications précédentes, **caractérisé en ce que**, à l'étape c), la phase liquide collectée est réutilisée pour un cycle de procédé suivant.

7. Procédé selon la revendication 6, **caractérisé en ce qu'**une phase liquide collectée est réutilisé pour un cycle de procédé suivant jusqu'à ce qu'une densité de la phase liquide collectée dépasse une valeur de 0,95 g/cm³.

8. Procédé selon l'une des revendications précédentes, **caractérisé en ce que**, à l'étape b), l'extraction est effectuée sans apport externe d'énergie thermique.

9. Procédé selon l'une des revendications précédentes, **caractérisé en ce que**, à l'étape b), l'extraction est favorisée par un traitement aux ultrasons.

10. Procédé selon l'une des revendications précédentes, **caractérisé en ce que**, après l'étape c), dans une étape supplémentaire d), la phase solide collectée, constituée majoritairement de polychlorure de vinyle, est traitée à l'aide d'au moins un traitement thermique provoquant la fusion du polychlorure de vinyle.

11. Procédé selon la revendication 10, **caractérisé en ce que**, à l'étape d), le traitement de fusion est effectué à l'aide d'au moins une première extrusion au moyen d'une extrudeuse.

12. Procédé selon la revendication 11, **caractérisé en ce que**, suite à l'au moins une première extrusion, une deuxième extrusion est effectuée au moyen d'une extrudeuse.

13. Procédé selon la revendication 11 ou 12, **caractérisé en ce que** la phase solide collectée, constitué majoritairement de polychlorure de vinyle, est dégazée dans une extrudeuse dans l'état fondu.

14. Procédé selon l'une des revendications 11 à 13, **caractérisé en ce que**, à la phase solide, constituée majoritairement de polychlorure de vinyle, est ajouté, au cours d'une extrusion, au moins un polymère réactif fonctionnalisé, plus particulièrement un copolymère de greffage ou un terpolymère pour la liaison de composants à faible poids moléculaire.
